(19) **Europäisches Patentamt**

**European Patent Office**

**Office européen des brevets**

(11) Veröffentlichungsnummer: **0 282 757 B1**

(12) **EUROPÄISCHE PATENTSCHRIFT**

(45) Veröffentlichungstag der Patentschrift: **16.12.92**

(21) Anmeldenummer: **88102453.3**

(22) Anmeldetag: **19.02.88**

(51) Int. Cl.⁵: **H02K 21/00**, H02K 21/14, H02P 7/62

(54) **Aus einem Stromrichter und einem von diesem gespeisten permanentmagneterregten Synchronmotor bestehende Antriebsanordnung.**

(30) Priorität: **02.03.87 DE 3706678**

(43) Veröffentlichungstag der Anmeldung:
**21.09.88 Patentblatt 88/38**

(45) Bekanntmachung des Hinweises auf die Patenterteilung:
**16.12.92 Patentblatt 92/51**

(84) Benannte Vertragsstaaten:
**CH DE ES FR GB IT LI**

(56) Entgegenhaltungen:
**DE-A- 3 204 864**
**DE-A- 3 427 103**
**DE-C- 915 114**
**US-A- 4 425 521**

(73) Patentinhaber: **SIEMENS AKTIENGESELL-SCHAFT**
**Wittelsbacherplatz 2**
**W-8000 München 2(DE)**

(72) Erfinder: **Rosenberg, Heinz, Dipl.-Ing.**
**Dr. Fidlerweg 15**
**A-2752 Wöllersdorf(DE)**

EP 0 282 757 B1

**Beschreibung**

Die Erfindung betrifft eine aus einem Stromrichter und einem von diesem gespeisten permanentmagneterregten Synchronmotor bestehende Antriebsanordnung, bei der der Synchronmotor mittels des Stromrichters in seiner Drehzahl gesteuert und über einen betriebsmäßig vorgegebenen Drehzahlbereich mit gleichbleibender Maximalleistung belastbar ist.

Da die von den Permanentmagneten in der Ankerwicklung induzierte Polradspannung mit der Drehzahl ansteigt, ist es bisher üblich, auch die Ausgangsspannung des Stromrichters mit der Drehzahl entsprechend zunehmen zu lassen, wobei der vom Synchronmotor aufgenommene Strom absinkt. Bei gleichbleibender Maximalleistung ergibt sich somit bei der kleinsten bzw. größten vorgesehenen Drehzahl eine Scheinleistung, die gleich dem Produkt $U_{min} \cdot I_{max}$ bzw. $U_{max} \cdot I_{min}$ ist, wobei diese Scheinleistungen annähernd gleich groß sind. Da der Stromrichter sowohl von der Spannung als auch vom Strom den jeweiligen Maximalwert liefern können muß, ist seine Typenleistung gleich dem Produkt $U_{max} I_{max}$ und somit wesentlich größer als die Maximalleistung des Synchronmotors. Dies ist hinsichtlich der Kosten und des Platzbedarfes einer solchen Antriebsanordnung sehr ungünstig.

Durch die DE-A-34 27 103 ist eine Maschine mit veränderlicher Drehzahl und permanentmagnetischer Läufererregung bekannt, bei der ein Teil des permanentmagnetischen Gesamtflusses über einen Nebenschluß abgezweigt wird und somit der die Ständerwicklung induzierende Hauptfluß entsprechend geschwächt wird. Der Nebenschlußkreis wird mittels Kondensatoren oder kapazitiv wirkenden Kombinationen von Kondensatoren und Drosseln derart drehzahlabhängig gesteuert, daß mit steigender Drehzahl der Maschine der über den Nebenschluß abgeleitete Fluß zunimmt; somit wird der Hauptfluß drehzahlabhängig geschwächt. Auf diese Weise läßt sich eine nur geringfügig drehzahlabhängige oder eine nahezu konstante Klemmenspannung erzielen. Wird eine solche Maschine an einem Stromrichter betrieben, so kann dieser für eine kleinere Nennleistung ausgelegt werden, als dies bei einer drehzahlproportionalen Änderung der Klemmenspannung der Maschine notwendig wäre.

Bei einer durch die DE-A-32 04 864 bekannten, über einen Umrichter gespeisten, drehzahlregelbaren elektrischen Maschine mit permanentmagneterregtem Läufer ist zur Begrenzung der durch die in der Speisespannung enthaltenen Überwellen hervorgerufenen Verluste am Läufer ein die Streuindudktivität der Maschine erhöhendes Joch vorgesehen. Diese Streuinduktivität stellt für die Oberwellen einen entsprechend hohen Widerstand dar, so daß die durch diese Überwellen hervorgerufenen Verlustströme klein gehalten werden.

Der Erfindung liegt die Aufgabe zugrunde, eine Antriebsanordnung der eingangs beschriebenen Art so auszubilden, daß die Typenleistung des Stromrichters in bezug auf die von dem Synchronmotor innerhalb eines betriebsmäßig vorgegebenen Drehzahlbereiches abzugebende Maximalleistung einen möglichst kleinen Wert annimmt.

Die Lösung der gestellten Aufgabe gelingt nach der Erfindung dadurch, daß im Stromkreis des Synchronmotors liegende, den vom Motor aufgenommenen Strom voll führende Induktivitäten oder induktiv wirkende Kombinationen von Drosseln und Kondensatoren so bemessen sind, daß bei Maximalleistung des Synchronmotors an den beiden Grenzen des Drehzahlbereiches die Ströme am Ausgang des Stromrichters gleich groß sind.

Die erforderliche Größe der Induktivitäten, die von den Abmessungen und Daten des Synchronmotors, dem Drehzahlbereich, der Maximalleistung und dem Verhältnis der Ausgangsspannung des Stromrichters zur Polradspannung des Synchronmotors an der unteren Drehzahlgrenze abhängt, kann vielfach allein bereits durch passende Auslegung des Synchronmotors erreicht werden. Ist eine derartige Auslegung des Synchronmotors nicht möglich, so können noch induktiv wirkende Kombinationen von Drosseln und Kondensatoren vorgesehen werden. Möglichkeiten zum Erreichen der gewünschten Größe der Induktivitäten durch zusätzliche äußere Maßnahmen sind in den Unteransprüchen beschrieben.

Anhand in der Zeichnung dargestellter Ausführungsbeispiele wird die Erfindung nachfolgend näher erläutert. Es zeigt:

FIG 1      den für die Erfindung verwerteten Verlauf des Stromes eines permanentmagneterregten Synchronmotors, der mit konstanter Spannung und Leistung betrieben wird, über der Drehzahl,

FIG 2      die Vektorbilder von Strom und Spannung an den Grenzen eines mit gleichbleibender Spannung und Maximalleistung gefahrenen Drehzahlbereiches bei erfindungsgemäß bemessenen Induktivitäten und Verlustgleichheit des Synchronmotors an Drehzahlgrenzen,

FIG 3      die Vektorbilder von Strom und Spannung an den Grenzen eines mit gleichbleibender Spannung und Maximalleistung gefahrenen Drehzahlbereiches bei erfindungsgemäß bemessenen Induktivitäten und ungleich großen Verlusten des Synchronmotors an diesen Drehzahlgrenzen,

FIG 4      einen Längsschnitt eines Teiles eines Synchronmotors mit einem auf der Welle angeordneten Streujoch,

FIG 5 einen Querschnitt entlang der Linie V-V in FIG 4,

FIG 6 einen Schaltplan mit in Serie zur Ankerwicklung des Synchronmotors geschalteter Drossel,

FIG 7 einen Querschnitt einer konzentrisch zur Motorwelle an einem Lagerschild des Synchronmotors angeordneten Drossel und

FIG 8 einen Längsschnitt eines Teiles des Synchronmotors mit einer an dem einen Lagerschild angeordneten Drossel im Schnitt entlang der Linie VIII-VIII in FIG 7.

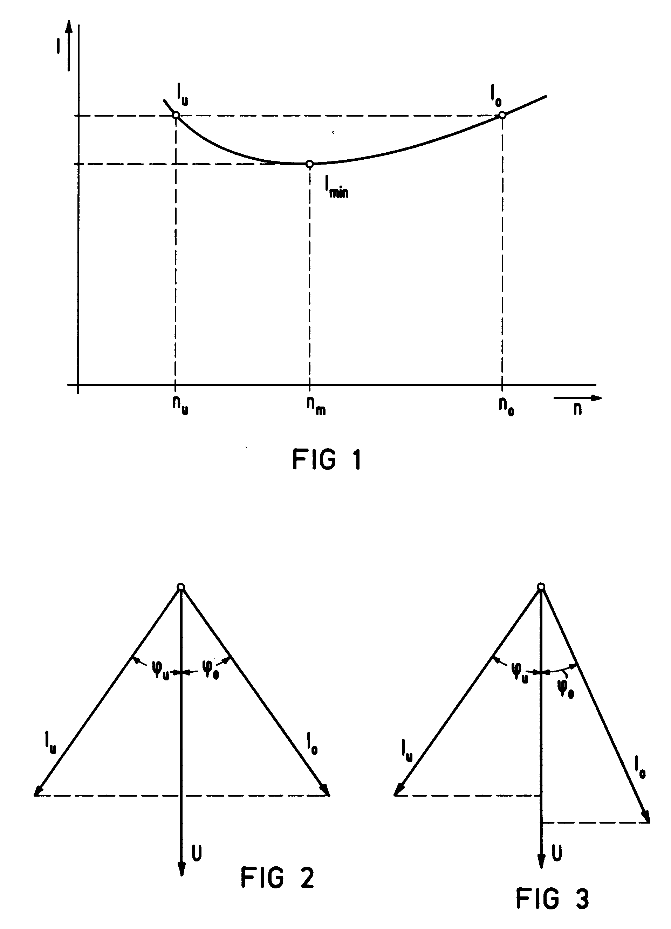

Wie in FIG 1 dargestellt, weist der Strom I eines mit konstanter Spannung und veränderbarer Frequenz gespeisten, konstant belasteten permanentmagneterregten Synchronmotors bei einer Drehzahl $n_m$ ein Minimum $I_{min}$ auf. Bei dieser Drehzahl $n_m$ ist der Leistungsfaktor $\cos \phi = 1$. Bei Drehzahlen unterhalb der Drehzahl $n_m$ ist die von den Permanentmagneten frequenzproportional induzierte Polradspannung kleiner als bei der Drehzahl $n_m$. Der Synchronmotor ist also untererregt und nimmt einen mit sinkender Drehzahl zunehmenden Blindstrom auf, weshalb der Gesamtstrom I ebenfalls ansteigt. Bei Drehzahlen oberhalb der Drehzahl $n_m$ ist der Synchronmotor übererregt und gibt demnach Blindstrom ab. Da dieser Blindstrom mit der Drehzahl zunimmt, steigt auch in diesem Bereich der Gesamtstrom I wieder an. Es gibt daher beliebig viele Paare von Drehzahlen unterhalb bzw. oberhalb der Drehzahl $n_m$, bei denen die Ströme gleich groß sind. Innerhalb des durch die Grenzdrehzahlen $n_u$ und $n_o$ begrenzten Drehzahlbereiches ist der Strom I stets kleiner als an den Grenzen des Drehzahlbereiches. Bei einer gegebenen Maschine und festgelegter Ausgangsspannung des Stromrichters hängt die Größe der einer gewünschten unteren Grenzzahl $n_u$ zugeordneten oberen Grenzdrehzahl $n_o$ weitgehend von den Induktivitäten im Stromkreis des Synchronmotors ab. Durch entsprechende Bemessung dieser Induktivitäten kann ein gewünschter Drehzahlbereich erzielt werden. Da an den Grenzen des Drehzahlbereiches die Ströme gleich groß und innerhalb des Drehzahlbereiches stets kleiner als an den Grenzen des Drehzahlbereiches sind, ferner die Spannung konstant ist, ergibt sich für die Typenleistung des Stromrichters ein Optimum.

Wie anhand der FIG 2 ersichtlich, ist bei Gleichheit der Motorverluste bei den beiden Grenzdrehzahlen, also Gleichheit der aufgenommenen Wirkleistungen, der Winkel $\phi_u$ um den der Strom $I_u$ bei der unteren Grenzdrehzahl $n_u$ der Spannung U nacheilt, gleich dem Winkel $\phi_o$ mit dem der Strom $I_o$ bei der oberen Grenzdrehzahl $n_o$ der Spannung U voreilt. Sind jedoch die Motorverluste und somit die aufgenommene Wirkleistung beispielsweise bei der oberen Grenzdrehzahl $n_o$ größer als bei der unteren Grenzdrehzahl $n_u$, so ist der Winkel $\phi_o$ kleiner als der Winkel $\phi_u$, wie in FIG 3 dargestellt.

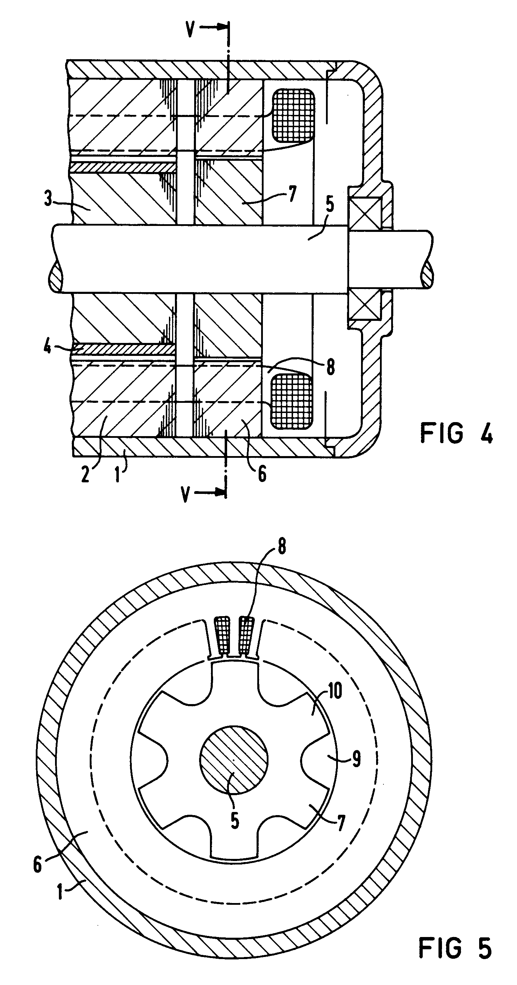

Die FIG 4 und 5 zeigen in einem Längs- und einem Querschnitt die Anordnung eines Streujoches an einem Synchronmotor. Wie in FIG 4 dargestellt, ist in dem Gehäuse 1 eines Synchronmotors außer dem dem mit Permanentmagneten 4 bestückten Läuferkern 3 zugeordneten Blechpaket 2 in axialem Abstand zu diesem ein zusätzliches Blechpaket 6 vorgesehen. Eine Ankerwicklung 8 durchsetzt die beiden Blechpakete 2 und 6 und erzeugt in letzterem einen Streufluß, der sich über ein auf der den Läuferkern 3 tragenden Welle 5 angebrachtes, geblechtes Streujoch 7 schließt. Dieses Streujoch 7 ist in axialem Abstand vom Läuferkern 3 angeordnet, um eine Schwächung des Nutzflusses der Permanentmagnete 4 zu vermeiden.

Wenn die durch das mitrotierende Streujoch 7 verursachte Erhöhung des Läuferträgheitsmomentes unerwünscht ist, kann das Streujoch 7 auch ruhend angeordnet werden, indem dieses konzentrisch in das zusätzliche Blechpaket 6 mit einer isolierenden Zwischenschicht eingefügt wird.

Die FIG 5 bildet im Schnitt eine Sonderausführung eines Streujochs ab. Dieses Streujoch 7 weist eine gleichmäßig über seinen Umfang verteilte Anzahl von Nuten 9 bzw. Zähnen 10 auf, die gleich der Polzahl des Motors ist. Ist das Streujoch 7 so auf der Welle angeordnet, daß seine Zähne 10 gleichachsig mit den Permanentmagneten 4 liegen, so verstärkt das Streujoch 7 vorwiegend die Längsinduktivität des Synchronmotors. Liegen hingegen die Nuten 9 gleichachsig zu den Permanentmagneten 4, so ergibt dies eine überwiegende Verstärkung der Querinduktivität. Damit kann durch das genutete Streujoch 7 auch das Verhältnis der Längs- zur Querinduktivität des Synchronmotors verändert und dadurch der Leistungsfaktor und das Kippmoment des Synchronmotors in einer gewünschter Weise beeinflußt werden.

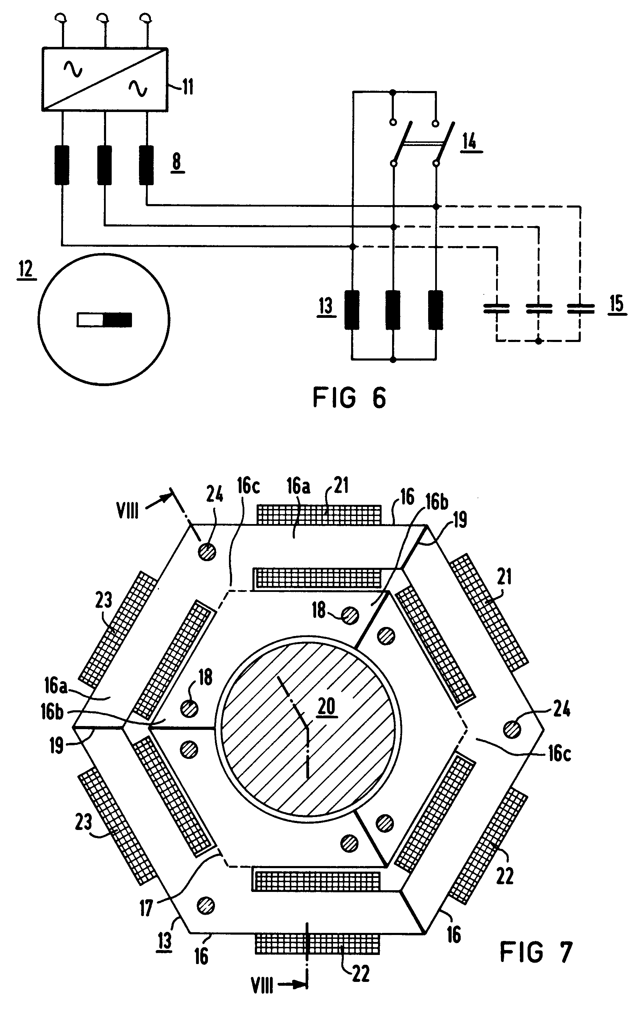

Eine Erhöhung der im Stromkreis des Synchronmotors wirkenden Induktivität mittels einer Drossel bietet gegenüber anderen Maßnahmen zwei Vorteile, die nachstehend beschrieben werden. Bei manchen Anwendungen der Antriebsanordnung, z.B. als Servoantrieb von Werkzeugmaschinen, kann es erforderlich sein, den Synchronmotor auch bei stark verringerter Spannung und Leistung mit gegenüber der unteren Grenzdrehzahl $n_u$ sehr kleinen Drehzahlen und mit Stillstandslagen hoher Positioniergenauigkeit zu betreiben. Im Hinblick auf den Steuerungsaufwand für den speisenden Stromrichter ist es dabei zweckmäßig, die Induktivität in diesem Betriebsbereich zu vermindern. Bei Anordnung einer Drossel ist dies durch deren Überbrückung möglich. In FIG 6 ist eine Schaltung hierfür dargestellt. Die dreisträngige Ankerwicklung 8 des Synchronmotors 12 ist offen ausgeführt und einerseits an einen speisenden Stromrichter 11 und andererseits an eine Drossel 13 angeschlossen. Um die Drossel 13 fallweise überbrücken zu können, ist ein mechanischer oder elektronischer Schalter 14 vorgesehen, der bei der gezeichneten Schaltung nur 2-polig zu sein braucht. Wäre hingegen die Drossel 13 zwischen den Stromrichter 11 und die Ankerwicklung 8 geschaltet, so müßte ein 3-poliger Überbrückungsschalter angeordnet werden.

Weiterhin wird fallweise durch Parallelschaltung von Kondensatoren 15 zur Drossel 13, wie dies in FIG 6 gestrichelt angedeutet ist, erreicht, daß die im Stromkreis des Synchronmotors 12 wirksame Ersatzinduktivität für diese Schaltung mit der Frequenz zunimmt, was ohne Veränderungen an dem Synchronmotor oder der Drossel eine Erhöhung der oberen Grenzdrehzahl $n_o$ bewirkt.

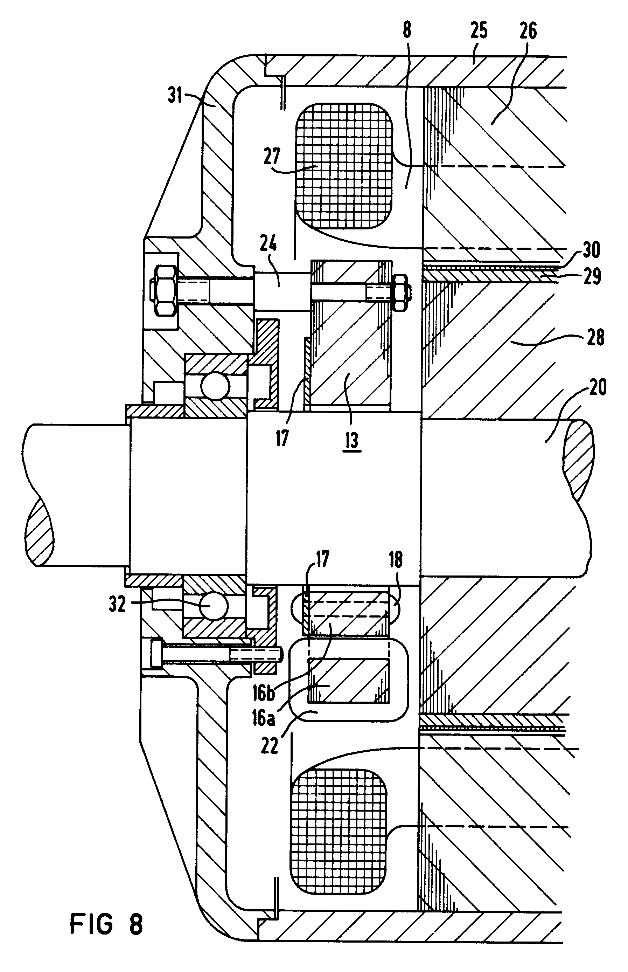

In den FIG 7 und 8 ist eine besonders platzsparende Ausbildung und Anordnung einer dreisträngigen Drossel dargestellt. Die FIG 7 zeigt eine derartige Drossel 13 im Querschnitt und die FIG 8 den Einbau einer solchen Drossel 13 in einem Synchronmotor. Die Drossel 13 ist aus drei Blechpaketen 16 aufgebaut. Jedes Blechpaket 16 besteht aus zwei äußeren, in einem Winkel von 120° zueinander verlaufenden Schenkeln 16a und zwei sich in radialem Abstand parallel zu den äußeren Schenkeln 16a erstreckenden inneren Schenkeln 16b. Die inneren und äußeren Schenkel 16b und 16a sind an ihren Knickstellen über einen sich in radialer Richtung erstreckenden Steg 16c miteinander verbunden. Die drei Blechpakete 16 sind an einer aus amagnetischem Werkstoff bestehenden Stirnplatte 17 durch je zwei Nieten 18 befestigt und bilden mit dieser Stirnplatte 17, deren Außenkontur in FIG 7 gestrichelt ergänzt ist, einen die Welle 20 des Synchronmotors konzentrisch umgebenden ringförmigen Körper mit sechseckiger Außenkontur. An den Stoßstellen der Blechpakete 16 sind Isolationsschichten 19 eingefügt, deren Dicke einem zur Vermeidung der magnetischen Sättigung erforderlichen Luftspalt entspricht. Vor dem Zusammenfügen der drei Blechpakete 16 werden auf deren äußere Schenkel 16a Wicklungsspulen 21,22 und 23 aufgeschoben, die die drei Wicklungsstränge der Drossel 13 bilden. Hierbei sind jeweils die beiden einem Blechpaket 16 zugeordneten Wicklungsspulen 21,22 bzw.22,23 bzw.23,21 in verschiedenen Strängen eingeschaltet und zwar derart, daß die Magnetflüsse der beiden äußeren Schenkel 16a jedes Blechpaketes 16 um 120° phasenverschoben sind. Die Magnetflüsse überlagern sich dadurch in dem Steg 16c zu einem Fluß gleicher Größe, weshalb der Querschnitt des Steges 16c nicht größer zu sein braucht als der Querschnitt der Schenkel 16a und 16b. Mittels dreier Bolzen 24 ist die Drossel 13 an der Innenseite des Motorlagerschildes 31 befestigt, wie aus der nachstehend erläuterten FIG 8 hervorgeht. Das Motorgehäuse 25 trägt ein Ständerblechpaket 26 mit einer Ankerwicklung 8. Auf der Welle 20 ist ein Läuferblechpaket 28 angeordnet, an dessen Oberfläche Permanentmagnete 29 mittels Bandagen 30 befestigt sind. Die Bolzen 24 sind an einem Ende mit den Blechpaketen 16 und am anderen Ende mit dem Motorlagerschild 31 verschraubt, wobei ihre radiale Lage die übliche Anordnung eines Kugellagers 32 gestattet. Wie aus FIG 8 ferner ersichtlich, bewirkt die Drossel 13 durch Ausnutzung des Raumes unterhalb der Wicklungsköpfe 27 der Ankerwicklung 8 keine nennenswerte Vergrößerung der Motorlänge. Wenn jedoch die Anordnung der Drossel 13 innerhalb des Motors nicht erwünscht oder möglich ist, kann eine Drossel der abgebildeten Art auch an der Außenseite eines Motorlagerschildes angebracht werden.

## Patentansprüche

1. Aus einem Stromrichter und einem von diesem gespeisten permanentmagneterregten Synchronmotor bestehende Antriebsanordnung, bei der der Synchronmotor (12) mittels des Stromrichters (11) in seiner Drehzahl gesteuert und über einen betriebsmäßig vorgegebenen Drehzahlbereich mit gleichbleibender Maximalleistung belastbar ist, ferner der Stromrichter (11) in diesem betriebsmäßigen Drehzahlbereich mit konstanter Ausgangsspannung betrieben ist, **dadurch gekennzeichnet,** daß im Stromkreis des Synchronmotors (12) liegende, den vom Motor aufgenommenen Strom voll führende Induktivitäten oder induktiv wirkende Kombinationen von Drosseln und Kondensatoren so bemessen sind, daß bei Maximalleistung des Synchronmotors (12) an den beiden Grenzen ($n_u$ und $n_o$) des Drehzahlbereiches die Ströme ($I_u$, $I_o$) am Ausgang des Stromrichters (11) gleich groß sind.

2. Antriebsanordnung nach Anspruch 1, **dadurch gekennzeichnet**, daß der Synchronmotor (12) mit Ankernutverschlüssen versehen ist, die zumindest teilweise aus einem magnetisierbaren Werkstoff bestehen und einen Wirbelströme unterdrückenden Aufbau aufweisen.

3. Antriebsanordnung nach Anspruch 1 oder 2, **dadurch gekennzeichnet**, daß die außerhalb der Nuten liegenden Teile (Wicklungsköpfe 27) der Ankerwicklung (8) mit einer elektrisch isolierenden, magnetisierbaren Masse versehen sind, die zumindest teilweise die Zwischenräume zwischen den einzelnen Leitern und Leiterbündeln ausfüllt und/oder die Leiterbündel umgibt.

4. Antriebsanordnung nach Anspruch 1,2 oder 3, **dadurch gekennzeichnet**, daß im Ständer des Synchronmotors ein zusätzliches Blechpaket (6) mit axialem Abstand zu dem dem Läuferkern (3) zugeordneten Blechpaket (2) vorgesehen ist und die Ankerwicklung (8) beide Blechpakete (2 und 6) durchsetzt und daß das zusätzliche Blechpaket (6) mit einem Streujoch (7) magnetisch gekoppelt ist, das mit axialem Abstand vom Läuferkern (3) angeordnet ist und vorzugsweise mit diesem mitrotiert.

5. Antriebsanordnung nach Anspruch 4, **dadurch gekennzeichnet**, daß das mitrotierende Streujoch eine gleichmäßig über den Umfang verteilte Anzahl von Nuten (9) bzw. Zähnen (10) aufweist, die gleich der Polzahl des Synchronmotors ist.

6. Antriebsanordnung nach einem oder mehreren der vorhergehenden Ansprüche, **dadurch gekennzeichnet**, daß mit der Ankerwicklung (8) des Synchronmotors (12) eine Drossel (13) in Serie geschaltet ist.

7. Antriebsanordnung nach Anspruch 6, **dadurch gekennzeichnet**, daß die Drossel (13) durch einen mechanischen oder elektronischen Schalter (14) überbrückbar ist.

8. Antriebsanordnung nach Anspruch 7, **dadurch gekennzeichnet**, daß die Ankerwicklung (12) des Synchronmotors offen ausgeführt und jeder Strang dieser Ankerwicklung (12) mit seinem einen Ende an den speisenden Stromrichter (11) und mit seinem anderen Ende an die Drossel (13) angeschlossen ist.

9. Antriebsanordnung nach Anspruch 6, 7 oder 8, **dadurch gekennzeichnet**, daß die Drossel (13) ringförmig ausgebildet und konzentrisch zur Welle (20) an einem Lagerschild (31) des Synchronmotors angeordnet ist.

10. Antriebsanordnung nach Anspruch 6,7,8 oder 9, **dadurch gekennzeichnet**, daß zur Drossel (13) Kondensatoren (15) parallel geschaltet sind.

### Claims

1. Drive arrangement comprising a converter and a synchronous motor with permanent-magnet excitation and fed by said converter, in which arrangement the synchronous motor (12) is controlled in its speed by means of the converter (11) and can be loaded with constant maximum power over an operationally specified speed range, moreover the converter (11) is operated in this operational speed range with constant output voltage, characterized in that inductances lying in the circuit of the synchronous motor (12) and fully conducting the current received by the motor, or combinations of inductors and capacitors acting inductively, are designed in such a way that with maximum power of the synchronous motor (12) at the two limits ($n_u$ and $n_o$) of the speed range the currents ($I_u$, $I_o$) at the output of the converter (11) are equally great.

2. Drive arrangement according to claim 1, characterized in that the synchronous motor (12) is provided with armature slot seals, which consist at least partially of a magnetizable material and have a construction which suppresses eddy currents.

3. Drive arrangement according to claim 1 or 2, characterized in that the parts (winding heads 27) of the armature winding (8) lying outside the grooves are provided with an electrically insulating, magnetizable substance, which at least partially fills the intermediate spaces between the individual conductors and conductor assemblies and/or surrounds the conductor assemblies.

4. Drive arrangement according to claim 1, 2 or 3, characterized in that there is provided in the stator of the synchronous motor an additional stack of sheets (6) axially spaced from the stack of sheets (2) associated with the rotor core (3), and the armature winding (8) passes through both stacks of sheets (2 and 6), and in that the additional stack of sheets (6) is magnetically coupled to a leakage yoke (7) which is arranged axially spaced from the rotor core (3) and preferably rotates therewith.

5. Drive arrangement according to claim 4, characterized in that the co-rotating leakage yoke has a number of grooves (9) or teeth (10) distributed evenly over the circumference, the number equalling the number of poles of the synchronous motor.

6. Drive arrangement according to one or more of the preceding claims, characterized in that a reactor (13) is connected in series with the armature winding (8) of the synchronous motor (12).

7. Drive arrangement according to claim 6, characterized in that the reactor (13) can be bridged by a mechanical or electronic switch (14).

8. Drive arrangement according to claim 7, characterized in that the armature winding (12) of the synchronous motor is constructed to be open and each phase of this armature winding (12) is attached with its one end to the feeding converter (11) and with its other end to the reactor (13).

9. Drive arrangement according to claim 6, 7 or 8, characterized in that the reactor (13) is constructed in the shape of a ring and is arranged concentrically to the shaft (20) on a bearing plate (31) of the synchronous motor.

10. Drive arrangement according to claim 6, 7, 8 or 9, characterized in that capacitors (15) are connected in parallel with the reactor (13).

**Revendications**

1. Dispositif d'entraînement constitué d'un convertisseur de courant et d'un moteur synchrone à excitation par aimant, alimenté par ce convertisseur, dans lequel le moteur synchrone (12) est commandé en vitesse de rotation au moyen du convertisseur (11) et peut être chargé à une puissance maximum constante sur une plage de vitesse de rotation prescrite de service, le convertisseur (11) étant en outre entraîné, dans cette plage de vitesse de rotation en fonction de la marche, par une tension de sortie constante, caractérisé en ce qu'il est prévu, dans le circuit du courant du moteur synchrone (12) et conduisant entièrement le courant absorbé par le moteur, des inductances ou des combinaisons de bobines de self et de condensateurs à action inductive, qui sont dimensionnées de telle façon que, pour la puissance maximum du moteur synchrone (12), les courants ($I_u$,$I_o$) à la sortie du convertisseur (11) sont égaux aux deux limites ($n_u$ et $n_o$) de la plage de vitesse de rotation.

2. Dispositif d'entraînement suivant la revendication 1, caractérisé en ce que le moteur synchrone (12) est muni de dispositifs de fermeture d'encoche d'induit, qui sont constitués au moins en partie d'un matériau magnétisable et qui présentent une structure supprimant les courants de Foucault.

3. Dispositif d'entraînement suivant la revendication 1 ou 2, caractérisé en ce que les parties (tête d'enroulement 27) de l'enroulement d'induit (8), qui se trouvent à l'extérieur des gorges, sont munies d'une masse magnétisable et isolante électriquement, qui emplit au moins en partie les intervalles entre les conducteurs individuels et les faisceaux de conducteurs et/ou qui entourent les faisceaux de conducteurs.

4. Dispositif d'entraînement suivant la revendication 1, 2 ou 3, caractérisé en ce que, dans le stator du moteur synchrone, est prévu un empilage de tôles (6) supplémentaire à distance axiale de l'empilage de tôles (2) associé au noyau rotorique (3) et l'enroulement d'induit (8) traverse les deux empilements de tôles (2 et 6), et en ce que l'empilement de tôles (6) supplémentaire est couplé magnétiquement à une culasse de dispersion (7) qui est disposée à distance axiale du noyau rotorique (3) et qui tourne, de préférence, avec celui-ci.

5. Dispositif d'entraînement suivant la revendication 4, caractérisé en ce que la culasse de dispersion qui tourne avec le noyau rotorique, comporte un certain nombre de gorges (9) ou de dents (10) réparties de manière uniforme sur le pourtour et qui est égal au nombre de pôles du moteur synchrone.

6. Dispositif d'entraînement suivant l'une ou plusieurs des revendications précédentes, caractérisé en ce qu'une bobine (13) est montée en série avec l'enroulement d'induit (8) du moteur synchrone (12).

7. Dispositif d'entraînement suivant la revendication 6, caractérisé en ce que la bobine (13) peut être shuntée par un interrupteur (14) mécanique ou électronique.

8. Dispositif d'entraînement suivant la revendication 7, caractérisé en ce que l'enroulement d'induit (12) du moteur synchrone est conçu de manière ouverte, et chaque face de cet enroulement d'induit (12) est reliée, par l'une de ses extrémités, au convertisseur (11) d'alimentation et, par son autre extrémité, à la bobine (13).

9. Dispositif d'entraînement suivant la revendication 6, 7 ou 8, caractérisé en ce que la bobine (13) est de forme annulaire et est montée concentriquement à l'arbre (20) sur un flasque (31) du moteur synchrone.

10. Dispositif d'entraînement suivant la revendication 6, 7, 8 ou 9, caractérisé en ce que des condensateurs (15) sont montés en parallèle à la bobine (13).

FIG 1

FIG 2

FIG 3

FIG 4

FIG 5

EP 0 282 757 B1

FIG 6

FIG 7

FIG 8